# FASCICULE DE BREVET EUROPEEN

(11) **EP 0 559 969 B1**
(45) Date de publication et mention de la délivrance du brevet: **15.05.1996**
(21) Numéro de dépôt: 92200652.3
(22) Date de dépôt: 06.03.1992
(51) Int. Cl.: D04H 1/54, D04H 13/00, E02B 11/00

(54) **Produit textile gaufre, procédé de préparation de celui-ci et dispositifs à cet effet**
Geprägtes Textilprodukt, Verfahren zu seiner Herstellung und Vorrichtungen dazu
Embossed fabric, process for preparing the same and devices therefor

(43) Date de publication de la demande: 15.09.1993
(73) Titulaire: SOMMER S.A., F-92022 Nanterre Cédex (FR)
(72) Inventeur: Leclerc, Alain, F-08210 Mouzon (FR); Marchal, André, F-08430 Raillicourt (FR)
(74) Mandataire: Van Malderen, Michel

(56) Documents cités:
- EP-A- 0 331 817
- EP-A- 0 432 586
- FR-A- 2 608 652
- GB-A- 2 078 271

## Description

### Objet de l'invention

La présente invention concerne un produit textile gaufré présentant des caractéristiques intéressantes de résistance à l'écrasement et de rigidité.

Les produits textiles selon la présente invention sont tout particulièrement destinés à la réalisation de produits dits "géotextiles" utilisés pour le drainage, le renforcement et la stabilisation des ouvrages de génie civil.

La présente invention concerne également le procédé de préparation des produits textiles selon l'invention et les dispositifs pour la mise en oeuvre de ce procédé.

### Etat de la technique et arrière-plan technoloqique à la base de l'invention

Les produits gaufrés sont des produits qui présentent une alternance de déformations en relief et de creux disposés en réseau et de préférence sous forme de quadrillage.

Il est bien entendu que l'on peut également envisager des réseaux imprimés au produit gaufré sous forme de juxtaposition de triangles d'hexagones.

Il est connu de pouvoir gaufrer des produits textiles en transformant des produits plats et uniformes en des produits présentant une surface régulièrement déformée. Le gaufrage d'un tel produit textile se réalise généralement en laminant le textile à traiter entre des cylindres dont l'un porte gravées en relief et l'autre gravé en creux les déformations à reproduire sur le textile.

Afin de rendre permanentes ces déformations, on soumet habituellement le textile à un traitement thermique simultané par exemple en chauffant les cylindres.

Cependant, les déformations que l'on peut apporter par cette technique, à des produits textiles, sont le plus souvent de faibles dimensions. En effet, il est difficile et coûteux de réaliser des cylindres portant gravées en creux des déformations de grandes dimensions qui puissent s'adapter parfaitement avec les cylindres portant gravées en relief les déformations correspondantes.

Il est également connu de gaufrer à plat un tricot à partir d'une nappe calandrée constitué de fils d'extrusion entrecroisés. Ces produits sont généralement destinés à des applications géospatiales.

Pour ce qui concerne les géotextiles, il convient de noter que ceux-ci sont généralement des produits composites formés par l'assemblage de plusieurs composants textiles ou non.

En particulier, il est connu d'utiliser des produits géotextiles composites (SOMDRAIN® commercialisé par Sommer BTP) constitués d'une ou plusieurs nappes filtrantes, associées par aiguilletage à une nappe drainante, éventuellement contre-collée à une membrane étanche (par exemple en polychlorure de vinyle) sur la face opposée à la nappe filtrante, pour obtenir un drainage des sols, éventuellement combiné à une certaine étanchéité par exemple le long des parois enterrées des bâtiments.

Cependant, ces produits ne présentent pas des propriétés suffisantes de rigidité et de résistance à l'écrasement sous des contraintes sévères, ce qui influence directement leur qualité de drainage. En effet, ces géotextiles voient leur transmissivité hydraulique et leur permittivité hydraulique diminuer en même temps que leur épaisseur lorsqu'ils sont soumis à des pressions trop élevées.

On connaît également l'association de ce matériau composite avec un drain de type classique peu déformable à la compression (SOMTUBE® et PREFADRAIN® commercialisés par Sommer BTP) qui permet de réduire le parcours d'écoulement de l'eau au sein de la nappe drainante.

Néanmoins, cette manière de procéder ne donne pas toujours des résultats satisfaisants, car elle n'apporte pas d'amélioration aux problèmes de la résistance à l'écrasement et de l'écoulement de l'eau au sein même de la nappe drainante.

### Buts de l'invention.

La présente invention vise à fournir un produit textile gaufré qui présente des caractéristiques de résistance à l'écrasement et de rigidité améliorées.

En particulier, la présente invention vise à fournir un produit textile qui convient à une application géotextile; ce produit textile étant destiné à composer la structure drainante d'un géotextile qui, du fait de sa résistance à l'écrasement améliorée, présente des propriétés améliorées de permittivité et de transmissivité hydrauliques.

Un but complémentaire de la présente invention vise à fournir un géotextile qui puisse également être utilisé dans la composition d'un drain collecteur performant.

La présente invention vise également à proposer un procédé simple et efficace pour la fabrication des produits textiles selon l'invention.

En outre, la présente invention vise à proposer un dispositif pour la mise en oeuvre dudit procédé qui soit de construction simple et par conséquent peu onéreuse.

### Principaux éléments caractéristiques de l'invention.

La présente invention concerne un produit textile gaufré dont la structure gaufrée se présente sous forme d'une alternance de déformations en relief et de creux disposés en réseau et de préférence sous forme de quadrillage, la nappe textile formant la structure gaufrée étant constituée d'une ou plusieurs nappes non tissées et la hauteur des déformations en relief constituant ladite structure gaufrée étant comprise entre 2 et 10 fois l'épaisseur de la nappe textile, caractérisé en ce que la structure rigidifiée présente une résistance à la compression comprise entre 2 et 4 kg / cm.

Selon une première forme d'exécution du produit selon l'invention, la nappe textile formant la structure gaufrée comporte une partie centrale, qui fait fonction d'"âme" rigide. Cette caractéristique est obtenue grâce à l'utilisation de deux nappes non-tissées que l'on chauffe superficiellement sur leurs faces destinées à venir en contact et que l'on présente lors du thermoformage de manière à ce que ces deux faces préchauffées se soudent par thermofusion.

Selon une autre forme d'exécution préférée du produit selon l'invention, la nappe textile formant la structure gaufrée présente au moins une face rigide située à l'extérieur sur la partie supérieure et/ou inférieure de ladite nappe textile. Dans ce cas, on chauffe, superficiellement, une ou deux nappes non-tissées de manière que lorsque celles-ci sont gaufrées, la ou les partie(s) initialement préchauffées, se situent à l'extérieur de la structure gaufrée.

La ou les nappes non-tissées destinées à former la structure gaufrée sont essentiellement constituées à base de fibres thermofusibles, en particulier, des fibres de polypropylène et/ou de polyéthylène. De ce fait, lorsque les fibres sont chauffées, elles auront tendance à se coller les unes aux autres et par conséquent, à rigidifier la structure gaufrée.

Ce phénomène est encore accentué aux endroits où les fibres ont été préalablement chauffées par rapport à l'étape de laminage.

Par conséquent, les produits selon l'invention présentent avantageusement des propriétés améliorées de rigidité mais également des propriétés améliorées de résistance à l'écrasement.

La présente invention concerne plus spécifiquement un produit textile gaufré tel que décrit ci-dessus à usage géotextile. En particulier, le produit textile selon la présente invention est destiné à constituer la structure drainante du produit géotextile qui sera éventuellement associé à une ou plusieurs nappes faisant fonction de filtre.

La structure drainante du produit géotextile selon l'invention présente par rapport aux produits géotextiles de l'état de l'art des qualités améliorées évidentes de drainage dues au fait que d'une part, elle possède des canaux d'écoulement disposés entre les déformations en relief et que d'autre part, elle présente des propriétés améliorées de résistance à l'écrasement et par conséquent des propriétés améliorées de transmissivité et de permittivité hydrauliques.

Sur cette structure drainante sont disposées de manière classique une ou plusieurs nappes planes essentiellement sous forme non-tissée et qui font fonction de filtre.

Il est bien entendu que l'on peut disposer un ou plusieurs filtres soit sur la partie supérieure soit sur la partie inférieure ou même des deux côtés de la structure drainante selon l'application à laquelle le géotextile composite est destiné.

En outre pour certaines applications, il peut être nécessaire de disposer de manière classique une couche d'étanchéité par exemple en PVC sur l'une ou l'autre des surfaces du produit géotextile et de préférence sur la surface opposée à celle où est disposée la ou les nappes filtrantes.

La présente invention se rapporte également à un drain collecteur disposé à la base du produit géotextile selon l'invention décrite précédemment. Ce drain collecteur est obtenu de manière aisée en recourbant sur elle-même une extrémité du produit textile selon l'invention et en la solidarisant sur elle-même.

Les propriétés de résistance et de robustesse de la structure drainante selon la présente invention la rendent semi-flexible et permettent de réaliser un drain collecteur suffisamment rigide pour la plupart des applications.

Les produits textiles selon la présente invention peuvent également être utilisés pour d'autres types d'applications par exemple comme support technique de sols ou de murs. Les canaux présents entre les différentes déformations en relief peuvent alors être utilisés pour permettre le passage de câbles électriques, de conduits ou similaires.

Une autre application envisageable est l'utilisation de ces produits textiles gaufrés comme élément d'insonorisation par exemple pour des pavillons et des garnitures de portières dans le domaine de l'industrie automobile.

La présente invention concerne également un procédé de fabrication d'un produit textile gaufré tel que défini précédemment. Ce procédé consiste éventuellement préalablement à chauffer superficiellement de préférence par infrarouge une ou deux nappes non-tissées, à amener chacune d'entre-elles sur un cylindre gravé, chacun des deux cylindres présentant des reliefs complémentaires et à thermoformer les deux nappes entre les cylindres.

Selon une première forme d'exécution du procédé, les deux nappes non-tissées sont disposées de telle manière que les deux faces initialement préchauffées sont destinées à entrer en contact l'une avec l'autre et se soudent lors du thermoformage. On obtient ainsi un produit textile dont la partie centrale est constituée des fibres soudées par fusion des deux nappes non-tissées et qui présente des caractéristiques améliorées de rigidité.

Selon une seconde forme d'exécution du procédé, une ou deux nappes non-tissées sont chauffées superficiellement de manière que lorsqu'elles arrivent en contact l'une avec l'autre lors du thermoformage entre les deux cylindres de gaufrage, la ou les surfaces préchauffées soient disposées vers l'extérieur de la structure gaufrée sur la partie supérieure et/ou inférieure.

En outre, le fait qu'il y ait deux nappes entraîne généralement une résistance moindre à la pression lors du thermoformage entre les cylindres.

Il est prévu que le centre d'au moins un des deux cylindres de gaufrage soit chauffé de manière à provoquer simultanément la fusion et la compression des fibres des nappes non-tissées afin d'imprimer par thermoformage de manière permanente les déformations formant la structure gaufrée.

Le second cylindre est de préférence non chauffé et entraîne de ce fait le produit gaufré obtenu, ce qui permet de faciliter le démoulage.

De manière générale, ce procédé de mise en oeuvre permet d'obtenir de manière tout à fait surprenante des produits présentant des résistances à la compression comprises entre 2 et 4 kg/cm.

Il est bien entendu que ce procédé peut s'effectuer de manière continue en effectuant tout simplement le gaufrage par thermoformage de deux nappes éventuellement préchauffées.

La présente invention concerne également le dispositif pour la mise en oeuvre du procédé décrit précédemment qui comprend essentiellement deux cylindres de gaufrage dont les reliefs sont complémentaires.

Selon la présente invention, le cylindre dit mâle comportant une structure en relief constituée d'éléments en saillie est réalisé de manière classique. Par contre, le cylindre dit femelle comportant une structure en creux est constitué par un cylindre comportant une structure constituée d'éléments en saillie conformément à la structure d'un cylindre mâle entre lesquels on a disposé et fixé selon la circonférence du cylindre des anneaux ou bagues. Ces bagues possèdent une épaisseur qui vaut la hauteur d'un élément en saillie. De cette manière, on obtient un cylindre femelle qui présente une structure en creux exactement complémentaire à la structure en relief du cylindre mâle adjacent.

### Brève description des figures

- Les figures 1 et 2 représentent des vues schématiques de produits textiles gaufrés selon deux modes d'exécution préférés de la présente invention.
- La figure 3 représente un produit textile gaufré selon la présente invention destiné à une application géotextile.
- Les figures 4 et 5 représentent des dispositifs de mise en oeuvre pour l'obtention des produits gaufrés selon les figures 1 et 2.
- La figure 6 représente une vue en perspective des deux cylindres d'un dispositif de gaufrage selon la présente invention.

### Description de deux modes d'exécution préférés de la présente invention

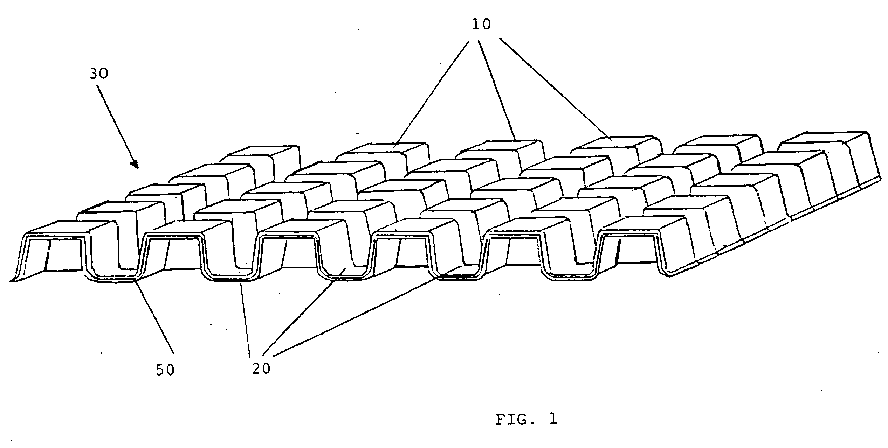

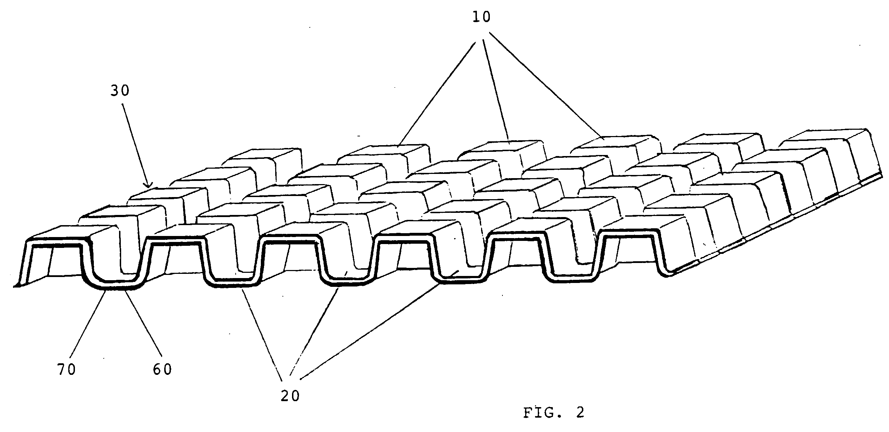

Les produits textiles gaufrés qui sont représentés aux figures 1 et 2 se présentent comme une alternance de reliefs 10 et de creux 20 disposés sous forme de quadrillage. De préférence, la hauteur des déformations en relief 10 est comprise entre 5 et 12 mm pour une épaisseur de la nappe textile 30 constitutive formant la structure gaufrée, inférieure à 1 mm.

Dans le cas particulier d'un produit textile destiné à une application géotextile, les canaux qui sont constitués par les creux 20 situés entre les déformations en relief 10 ont une largeur d'environ 1 cm et la base de ces déformations 10 situées aux intersections des canaux 20 se présente de préférence sous la forme d'un carré de 1 cm de côté. On peut bien entendu envisager d'autres dispositions, par exemple des déformations se présentant commme une juxtaposition de rectangles, triangles, hexagones entre lesquels sont disposés des creux.

Selon une forme d'exécution préférée, la nappe textile 30 constituant la structure gaufrée est obtenue à partir de deux nappes non-tissées 105 et 115 présentant avant le gaufrage une épaisseur de 3 à 4 mm et une densité de 300 à 400 g/m.

Les fibres constituant ces nappes non-tissées 105 et 115 sont thermofusibles et, de préférence, de polypropylène et/ou de polyéthylène.

A titre d'exemple, on peut citer les compositions pour la ou les nappes non-tissées, comprenant 70% de fibres de polypropylène et 30% de fibres de polyéthylène.

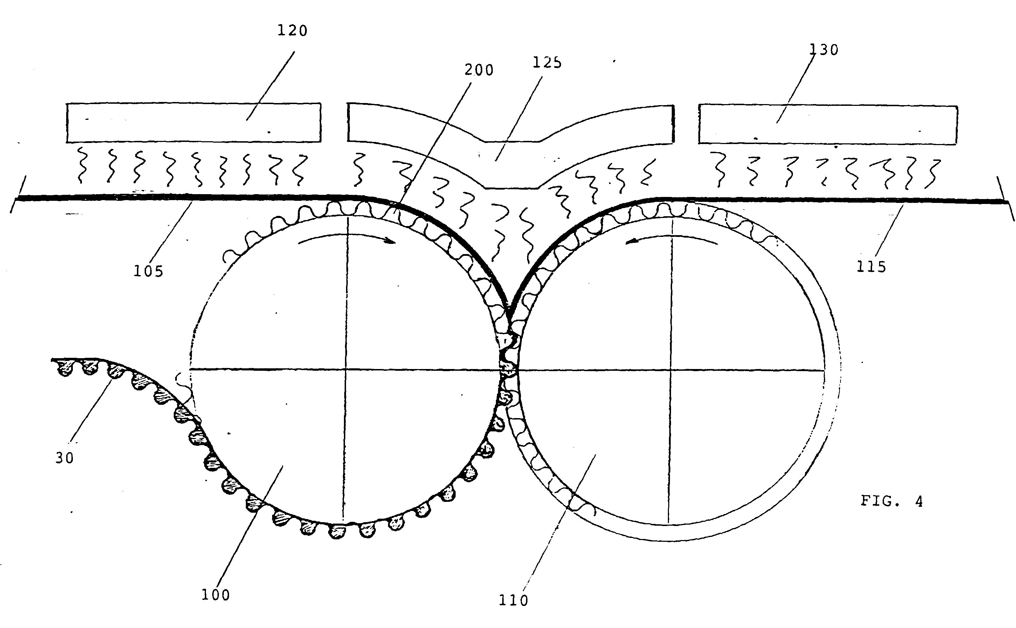

Selon une première forme d'exécution d'un produit selon la présente invention qui est représenté plus particulièrement à la figure 1, les deux nappes non-tissées 105 et 115 sont superficiellement chauffées, préalablement au thermoformage, de manière à ce que les faces préchauffées entrent en contact lors du thermoformage entre les cylindres de gaufrage et se soudent par thermofusion formant ainsi une partie 50 plus rigide au centre de la nappe textile 30 constituant la structure gaufrée (voir figure 4).

Il convient de noter que cette partie 50 joue le rôle d'"âme" rigide dans la structure gaufrée.

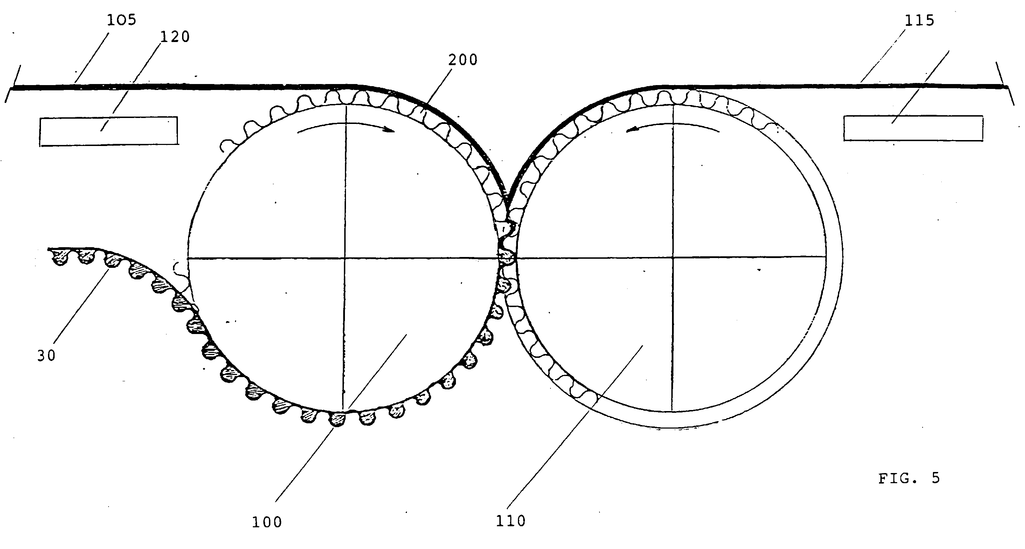

Selon une seconde forme d'exécution d'un produit textile de la présente invention qui est représenté à la figure 2, on chauffe également superficiellement et préalablement au thermoformage, mais de l'autre côté par rapport à la forme d'exécution représentée à la figure 4, les deux nappes non-tissées 105 et 115 de telle manière que des parties rigides 60 ou 70 se présentent vers l'extérieur de ladite structure (voir figure 5).

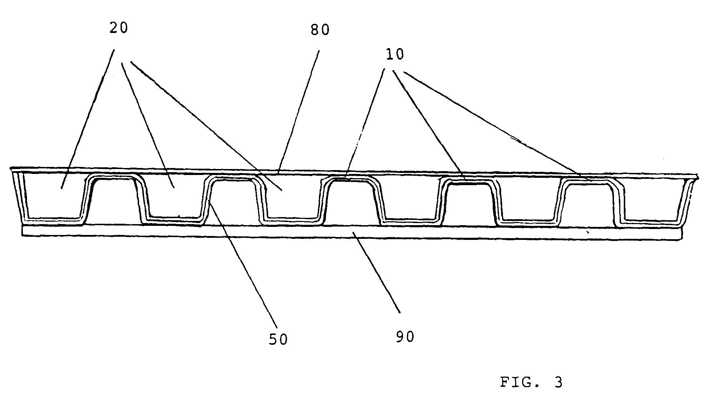

La figure 3 représente un produit textile gaufré destiné à une application plus spécifique, c'est-à-dire à une application géotextile.

La nappe textile 30 formant la structure gaufrée qui est destinée à former la strucure drainante 40 d'un géotextile est associée à une nappe non-tissée plane 80 qui fait fonction de filtre. Cette nappe 80 est disposée sur le sommet des déformations 10 formant la structure gaufrée. Eventuellement, une couche d'étanchéité 90, de préférence en PVC, est disposée sur la face opposée à celle où est disposée la nappe filtrante 80.

En outre, en recourbant sur elle-même une extrémité de la structure gaufrée éventuellement associée à une nappe non-tissée 80, et en la solidarisant, on peut obtenir un drain collecteur.

La figure 4 représente une vue schématique d'un dispositif destiné à produire un produit textile comme représenté dans la figure 1.

Ce dispositif est essentiellement constitué de deux cylindres 100 et 110 entraînés en rotation afin de laminer de manière convergente deux nappes non-tissées 105 et 115 qui sont préalablement chauffées à l'aide de dispositifs à infrarouge 120, 125 et 130. Ces deux cylindres 100 et 110 comportent des reliefs complémentaires et sont en particulier constitués d'un cylindre appelé cylindre mâle 100 qui comporte des éléments en saillie sur la périphérie de celui-ci et d'un second cylindre 110 appelé cylindre femelle comportant le même dessin mais gravé en creux.

Selon une forme d'exécution préférée de la présente invention, le cylindre mâle 100 est non chauffé ou faiblement chauffé tandis que le cylindre femelle 110 sera chauffé à une température de l'ordre de 130 à 150°C. Ceci signifie bien entendu qu'on imprime un relief permanent par thermoformage à la nappe textile 30 constituant la structure gaufrée du fait que les fibres constituant cette nappe sont thermofusibles.

Le fait qu'un des deux cylindres ne soit pas chauffé permet d'entraîner avec lui la nappe textile gaufrée et facilite le démoulage de celle-ci.

De préférence, les vitesses de rotation des cylindres sont calculées de manière que la vitesse relative d'obtention du produit textile selon l'invention soit de l'ordre de 4 à 5 m par minute.

Selon une autre forme d'exécution du dispositif représenté à la figure 5 et destiné à la mise en oeuvre de produits selon l'invention qui sont représentés plus spécifiquement à la figure 2, on préfère chauffer les nappes 105 et 115 destinées à former la structure gaufrée 30 de telle manière que les parties rigides 60 et 70, obtenues par la fusion superficielle des fibres, se situent à l'extérieur de ladite structure gaufrée.

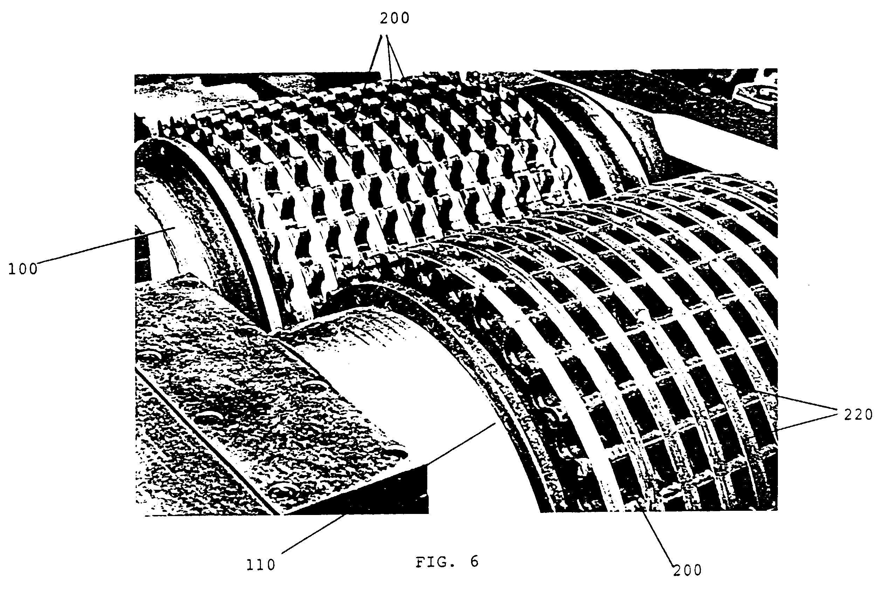

La figure 6 représente une vue en perspective des cylindres de gaufrage 100 et 110 d'un dispositif selon la présente invention.

Le cylindre 100 appelé cylindre mâle qui comporte les éléments 200 en saillie formant la structure en relief est fabriqué de manière classique.

Par contre, le cylindre 110 appelé cylindre femelle, qui comporte la structure en creux, est constitué d'un cylindre comportant des éléments 200 en saillie comme c'est le cas pour un cylindre mâle entre lesquels on a disposé et scellé, selon la circonférence, des bagues ou anneaux 220. Ces bagues 220 présentent une épaisseur qui vaut la hauteur des éléments 200 en saillie.

De cette manière, on arrive à obtenir des cylindres gravés en creux présentant des hauteurs de creux relativement importantes et pouvant être aisément supérieures au centimètre, cylindres que les techniques de gravure classiques ne permettaient pas d'obtenir.

Ainsi que déjà mentionné précédemment, les produits textiles selon la présente invention sont principalement destinés à être utilisés comme structure drainante d'un géotextile. En particulier la structure gaufrée servant de structure drainante pour un géotextile selon la présente invention possède des caractéristiques de transmissivité hydraulique améliorées si on la compare aux produits géotextiles classiques.

A titre d'exemple, on peut citer des transmissivités de l'ordre de 10⁻³ m/s pour des contraintes appliquées de 2 bars par cm conformément à la norme française NFG 38-018 d'octobre 1988 établie par l'Association Française de Normalisation (AFNOR), alors que pour les produits géotextiles classiques dont la structure drainante est seulement constituée de nappes non-tissées classiques et, en particulier, qui n'ont pas subi le procédé selon la présente invention, ces valeurs se situent entre 10⁻⁴ et 10⁻⁶ m/sec.

## Revendications

1. Produit textile gaufré dont la structure gaufrée se présente sous forme d'une alternance de déformations en relief (10) et de creux (20) disposés en réseau et de préférence sous forme de quadrillage, la nappe textile (30) formant la structure gaufrée étant constituée d'une ou plusieurs nappes non tissées (105, 115) et la hauteur des déformations en relief (10) constituant ladite structure gaufrée étant comprise entre 2 et 10 fois l'épaisseur de la nappe textile (30), caractérisé en ce que la structure rigidifiée présente une résistance à la compression comprise entre 2 et 4 kg / cm.

2. Produit textile gaufré selon la revendication 1 caractérisé en ce que la nappe textile (30) formant la structure gaufrée comporte une partie centrale (50) qui fait fonction d'âme rigide.

3. Produit textile gaufré selon la revendication 1 caractérisé en ce que la nappe de textile (30) formant la structure gaufrée présente au moins une face rigide (60, 70) située sur la face supérieure et/ou inférieure de la nappe textile (30).

4. Produit textile gaufré selon l'une quelconque des revendications précédentes caractérisé en ce que la ou les nappes non-tissées (105, 115) sont constituées de fibres thermofusibles, de préférence de fibres de polypropylène et/ou de polyéthylène.

5. Produit textile gaufré selon l'une quelconque des revendications précédentes caractérisé en ce qu'il est associé à une ou plusieurs nappes planes non-tissées (80) faisant fonction de filtre et éventuellement à une couche d'étanchéité (90) en vue de former la structure drainante (40) d'un produit géotextile.

6. Produit textile selon la revendication 5 caractérisé en ce qu'il est recourbé et solidarisé sur lui-même pour former un drain collecteur.

7. Procédé de fabrication d'un produit textile gaufré selon l'une quelconque des revendications précédentes caractérisé en ce qu'on assemble deux nappes non-tissées (105, 115), chaque nappe arrivant sur un cylindre (100, 110), au moins une nappe étant chauffée superficiellement, et en ce qu'on thermoforme les deux nappes (105, 115) entre lesdits cylindres, en vue d'obtenir la structure gaufrée du produit textile.

8. Procédé selon la revendication 7 caractérisé en ce qu'on chauffe superficiellement les deux nappes non-tissées (105, 115) sur leurs faces destinées à venir en contact l'une avec l'autre et en ce qu'on les amène lors du thermoformage à se souder par thermofusion.

9. Procédé selon la revendication 7 caractérisé en ce qu'on chauffe superficiellement une ou les deux nappes non-tissées (105, 115) sur leur face destinée à être disposée vers l'extérieur sur la partie supérieure et/ou inférieure de la structure gaufrée.

10. Procédé selon l'une quelconque des revendications 7 à 9 caractérisé en ce que l'un des deux cylindres (110) est chauffé de manière à provoquer simultanément la fusion et la compression des fibres des nappes non-tissées (105, 115) lors du thermoformage et en ce que le second cylindre (100) est non chauffé de manière à entraîner le produit textile gaufré obtenu et à permettre un démoulage aisé de celui-ci.

11. Procédé selon l'une quelconque des revendications 7 à 10 caractérisé en ce qu'il s'effectue de manière continue.

12. Dispositif pour la mise en oeuvre du procédé selon l'une quelconque des revendications 7 à 11 caractérisé en ce qu'il comprend essentiellement deux cylindres de gaufrage (100, 110) dont les reliefs sont complémentaires, un des cylindres (100) comportant une structure en relief constituée d'éléments en saille (200) qui est réalisé de manière classique et l'autre cylindre (110) comportant une structure en creux étant lui-même constitué d'un cylindre comportant une structure en relief constituée d'éléments en saillie (200) entre lesquels on a disposé et scellé circonférentiellement des anneaux ou bagues (220).

13. Dispositif selon la revendication 12 caractérisé en ce que l'épaisseur des bagues ou anneaux (220) vaut la hauteur des éléments en saillie (200) du cylindre (110).

14. Dispositif selon la revendication 12 ou 13 caractérisé en ce qu'il comprend au moins un dispositif de chauffage par infra-rouge (125, 130) de manière à chauffer superficiellement les nappes non-tissées (105, 115) avant qu'elles ne soient thermoformées entre les cylindres (100, 110).

## Patentansprüche

1. Gaufriertes Textilprodukt, dessen gaufrierte Struktur die Form einer Aufeinanderfolge von erhabenen Verformungen (10) und von Vertiefungen (20) hat, die in Form eines Netzes und vorzugsweise in Form eines Rasters angeordnet sind, wobei die Textileinlage (30), die die gaufrierte Struktur bildet, aus einer oder mehreren Faservlies-Einlagen (105, 115) besteht, und die Höhe der erhabenen Verformungen (10), die die gaufrierte Struktur bilden, gleich der 2- bis l0fachen Dicke der Textileinlage ist, dadurch gekennzeichnet, daß die versteifte Struktur eine Druckfestigkeit zwischen 2 und 4 kg/cm aufweist.

2. Gaufriertes Textilprodukt gemäß Anspruch 1, dadurch gekennzeichnet, daß die Textileinlage (30), die die gaufrierte Struktur bildet, einen mittleren Teil (50) umfaßt, der als starre Seele dient.

3. Gaufriertes Textilprodukt gemäß Anspruch 1, dadurch gekennzeichnet, daß die Textileinlage (30), die die gaufrierte Struktur bildet, mindestens eine starre Fläche (60, 70) aufweist, die auf der oberen und/oder unteren Fläche der Textileinlage (30) gelegen ist.

4. Gaufriertes Textilprodukt gemäß irgendeinem der vorhergehenden Ansprüche, dadurch gekennzeichnet, daß die Faservlies-Einlage oder Faservlies-Einlagen (105, 115) aus thermoschmelzbaren Fasern, vorzugsweise Polypropylen- und/oder Polyäthylenfasern, bestehen.

5. Gaufriertes Textilprodukt gemäß irgendeinem der vorhergehenden Ansprüche, dadurch gekennzeichnet, daß es mit einer oder mehreren ebenen Faservlies-Einlagen (80), die als Filter dienen, und eventuell mit einer Dichtungsschicht (90) kombiniert ist, um die dränierende Struktur (40) eines Geotextilprodukts zu bilden.

6. Textilprodukt gemäß Anspruch 5, dadurch gekennzeichnet, daß es umgebogen und fest verbunden ist, um einen Sammeldrän zu bilden.

7. Verfahren zur Herstellung eines gaufrierten Textilprodukts gemäß irgendeinem der vorhergehenden Ansprüche, dadurch gekennzeichnet, daß zwei Faservlies-Einlagen (105, 115) zusammengefügt werden, wobei jede Einlage auf einem Zylinder (100, 110) zugeführt wird, und mindestens eine Einlage oberflächlich erhitzt wird, und daß die zwei Einlagen (105, 115) zwischen den Zylindern thermogeformt werden, um die gaufrierte Struktur des Textilprodukts zu erhalten.

8. Verfahren gemäß Anspruch 7, dadurch gekennzeichnet, daß die zwei Faservlies-Einlagen (105, 115) auf ihren Flächen, die dazu bestimmt sind, miteinander in Kontakt gebracht zu werden, oberflächlich erhitzt werden, und daß sie bei der Thermoformung durch Thermofusion miteinander verschweißt werden.

9. Verfahren gemäß Anspruch 7, dadurch gekennzeichnet, daß eine oder beide Faservlies-Einlagen (105, 115) auf ihrer Fläche, die dazu bestimmt ist, auf dem oberen und/oder unteren Teil der gaufrierten Struktur nach außen angeordnet zu werden, oberflächlich erhitzt werden.

10. Verfahren gemäß irgendeinem der Ansprüche 7 bis 9, dadurch gekennzeichnet, daß der eine der zwei Zylinder (110) so erhitzt wird, daß bei der Thermoformung gleichzeitig die Schmelzung und die Kompression der Fasern der Faservlies-Einlagen (105, 115) hervorgerufen wird, und daß der zweite Zylinder nicht erhitzt wird, so daß das erhaltene gaufrierte Produkt mitgeführt wird und eine leichte Entformung dieses Produkts ermöglicht wird.

11. Verfahren gemäß irgendeinem der Ansprüche 7 bis 10, dadurch gekennzeichnet, daß es kontinuierlich abläuft.

12. Vorrichtung zur Verwirklichung des Verfahrens gemäß irgendeinem der Ansprüche 7 bis 11, dadurch gekennzeichnet, daß es im wesentlichen zwei Gaufrierzylinder (100, 110) aufweist, deren Reliefs komplementär sind, wobei einer der Zylinder (100) eine aus vorragenden Elementen (200) bestehende, erhabene Struktur umfaßt, die auf herkömmliche Weise verwirklicht ist, und der andere Zylinder (110), der eine vertiefte Struktur umfaßt, selbst aus einem Zylinder besteht, der eine erhabene Struktur umfaßt, die aus vorragenden Elementen (200) besteht, zwischen denen über den Umfang Ringe (220) angeordnet und eingelassen wurden.

13. Vorrichtung gemäß Anspruch 12, dadurch gekennzeichnet, daß die Dicke der Ringe (220) der Höhe der erhabenen Elemente (200) des Zylinders (110) entspricht.

14. Vorrichtung gemäß Anspruch 12 oder 13, dadurch gekennzeichnet, daß sie mindestens eine Infrarot-Heizvorrichtung (125, 130) aufweist, um die Faservlies-Einlagen (105, 115) oberflächlich zu erhitzen, bevor sie zwischen den Zylindern (100, 110) thermogeformt werden.

## Claims

1. Embossed textile product the embossed structure of which has alternating raised deformations (10) and cavities (20) in an array arrangement, preferably in a squared pattern, the textile web (30) forming said embossed structure being formed with various nonwoven webs (105, 115) and the raised deformation (10) heigth forming said embossed structure being comprised between 2 and 10 times the thickness of the textile web (30), characterized in that the stiffened structure has a compression resistance comprised between 2 and 4 kg/cm.

2. Embossed textile product according to claim 1, characterized in that the textile web (30) forming the embossed structure has a central part (50) as a rigid core.

3. Embossed textile product according to claim 1, characterized in that the textile web (30) forming the embossed structure has at least one rigid side (60, 70) located on the upper and/or lower side of the textile web (30).

4. Embossed textile web according to any of the preceding claims, characterized in that the nonwoven web(s) (105, 115) is (are) formed with heat melting fibers, preferably polypropylene and/or polyethylene fibers.

5. Embossed textile product according to any of the preceding claims, characterized in that it is associated with one or more flat nonwoven webs (80) as a filter and possibly with a seal layer (90) so as to form the drain structure (40) of a geotextile product.

6. Embossed textile product according to claim 5, characterized in that it is curved and integral with itself so as to form a drain collector.

7. Process for manufacturing an embossed textile product according to any of the preceding claims, characterized in that two nonwoven webs (105, 115) are assembled together, each web coming onto a cylinder (100, 110), at least one web being heated superficially, and in that both webs (105, 115) are thermoformed between said cylinders so as to obtain the embossed structure of the textile product.

8. Process according to claim 7, characterized in that both nowoven webs (105, 115) are heated superficially on the sides thereof to be contacted with each other and in that they are caused upon thermoforming to be welded by heat melting.

9. Process according to claim 7, characterized in that either one or both of the nonwoven webs (105, 115) are heated superficially on the side therof to be located toward the outside on the upper and/or lower side of the embossed structure.

10. Process according to any of claims 7 to 9, characterized in that one of both cylinders (110) is heated so as to cause simultaneously melting and compression of the fibers of the nonwoven webs (105, 115) upon thermoforming and in that the second cylinder (100) is not heated so as to drive the embossed textile product obtained and to allow for an easy release thereof.

11. Process according to any of claims 7 to 10, characterized in that it is carried out continuously.

12. Device to implement the process according to any of claims 7 to 11, characterized in that it comprises substantially two embossing cylinders (100, 110) the raised parts of which are complementary, one of said cylinders (100) comprising a raised structure formed with projections (200) which is conventionally made and the other cylinder (110) comprising a hollow structure being itself made of a cylinder comprising a raised structure formed with projecting elements (200) between which rings (220) are located and sealed circumferentially.

13. Device according to claim 12, characterized in that the thickness of the rings (220) is equivalent to the heigth of the projecting elements (200) of the cylinder (110).

14. Device according to claim 12 or 13, characterized in that it comprises at least one infrared heating device (125, 130) so as to heat superficially the nonwoven webs (105, 115) before they are thermoformed between the cylinders (100, 110).
